# EUROPEAN PATENT SPECIFICATION

(11) **EP 3 742 031 B1**
(45) Date of publication and mention of the grant of the patent: **14.12.2022**
(21) Application number: 18901043.2
(22) Date of filing: 26.12.2018
(51) Int. Cl.: F16K 31/04, F25B 41/35, F16K 1/04

(54) **MOTOR-DRIVEN VALVE**
MOTORBETRIEBENES VENTIL
SOUPAPE MOTORISÉE

(30) Priority: 17.01.2018 JP 2018005433
(43) Date of publication of application: 25.11.2020
(73) Proprietor: Fujikoki Corporation, Tokyo 158-0082 (JP)
(72) Inventor: YOSHIDA Tatsuya, Tokyo 158-0082 (JP); YAZAWA Masashi, Tokyo 158-0082 (JP)
(74) Representative: Ter Meer Steinmeister & Partner
(86) International application number: PCT/JP2018/047805
(87) International publication number: WO 2019/142632

(56) References cited:
- JP-A- S5 626 692
- JP-A- S56 163 089
- JP-A- 2001 246 487
- JP-A- 2004 183 756
- JP-A- 2004 183 756
- JP-A- 2009 195 948
- JP-A- 2011 208 716
- JP-A- 2011 208 716
- JP-A- 2016 023 711
- JP-A- 2017 160 928
- JP-A- 2017 160 928
- JP-A- 2018 035 821

## Description

### Technical Field

The present disclosure relates to a motor-driven valve used as a flow control valve or the like incorporated into refrigeration cycles of air conditioners, refrigerators, or the like.

### Background Art

This type of motor-driven valve that has been known includes, for example, a valve body having a valve chamber and a valve orifice formed in the valve chamber, a valve element for opening and closing the valve orifice, a can protruding from the valve body, a stator coil disposed on the outer side of the can, a rotor disposed on the inner side of the can and adapted to be rotated through energization of the stator coil, a threaded pipe (a guide bush) fixed to the valve body, a valve shaft holder formed to be rotatable with the rotor and adapted to cause the valve element to open and close the valve orifice via a valve shaft using a thread feeding function realized together with the threaded pipe, a valve-closing spring interposed between the valve shaft holder and the valve shaft and adapted to urge the valve element, via the valve shaft, in a direction in which the valve orifice is closed, and a stopper (a fixation member) for preventing, in cooperation with the valve-closing spring, the relative movement between the valve shaft holder and the rotor in directions in which the valve element opens and closes the valve orifice (see, for example, Patent Literature 1).

For securing the closure of the valve orifice by the valve element, this type of conventional motor-driven valve is typically configured such that after the valve element is seated in a valve seat provided in the valve orifice to close the valve orifice, the rotor and the valve shaft holder are rotated by a predetermined amount (rotation amount) in the direction in which the valve is closed so as to be further lowered, thereby compressing the valve-closing spring interposed between the valve shaft holder and the valve shaft to press the valve element against the valve seat.

Specifically, in closing the motor-driven valve, the stator coil is energized in one direction, which rotates the rotor, thereby rotating the valve shaft holder relative to the guide bush (the threaded pipe). Herein, a thread feeding mechanism of the guide bush (a fixed thread portion thereof) and the valve shaft holder (a movable thread portion thereof) lowers the valve shaft holder, for example, thereby lowering the valve shaft to cause the valve element to close the valve orifice. At this time, a movable stopper (an upper stopper portion) of the valve shaft holder and a fixed stopper (a lower stopper portion) of the guide bush, which form a stopper mechanism for limiting the rotation of the valve shaft holder (and the rotor) in the direction in which the valve is closed and the downward movement of the valve shaft holder, are positioned apart from each other.

When the stator coil in the aforementioned state is further energized in one direction, the thread feeding mechanism further lowers the valve shaft holder, with the valve orifice closed by the valve element (that is, with the valve shaft at rest). When the valve shaft holder is lowered by a predetermined amount, the movable stopper of the valve shaft holder and the fixed stopper of the guide bush abut each other, so that a further downward movement of the valve shaft holder is limited by the stopper mechanism. At this time, since the valve-closing spring interposed between the valve shaft holder and the valve shaft is compressed, the valve element is firmly pressed against the valve seat, so that the valve-closing performance is secured (a fully closed state). Further, at this time, the valve shaft holder is separated from the fixation member (the stopper) fixed to the valve shaft by a predetermined amount of gap in the lifting and lowering direction.

Meanwhile, in opening the motor-driven valve in the fully-closed state, the stator coil is energized in the other direction, so that the rotor is relatively rotated in the direction reverse to the aforementioned direction with respect to the guide bush securely attached to the valve body, and the valve shaft holder is lifted by the thread feeding mechanism. Herein, since the valve shaft holder is positioned, by the predetermined amount of gap, apart from the fixation member fixed to the valve shaft, during this time (while the valve shaft holder is being lifted by the predetermined amount of gap), the valve shaft holder is being lifted with the valve orifice closed by the valve element (with the valve shaft at rest).

When the stator coil in the aforementioned state is further energized in the other direction to lift the valve shaft holder by the predetermined amount of gap, the valve shaft holder (the upper face thereof) abuts the fixation member (the underside of a disc-like portion thereof) fixed to the valve shaft and is thus lifted together with the valve shaft, so that the valve element at the lower end of the valve shaft is moved upward to open the valve orifice.

In this manner, through energization of the stator coil, the rotor is rotated and the valve shaft holder is rotated integrally with the rotor, thereby lifting or lowering the valve shaft together with the valve element, so that the gap (the lift amount) between the valve element and the valve seat is increased or decreased to adjust the flow rate of a liquid such as a refrigerant.

JP 2017 160928 A discloses a motor valve having all the features of the preamble of claim 1. In this motor valve a bearing member is attached to a valve housing by press fitting into the valve housing, and a fixation side stopper member which is attached to the bearing member to form a body assembly. A magnet rotor is attached to a valve rod (a rotor shaft) on which a biasing spring is mounted by a fixing member to form a valve body assembly.

JP 2016 023711 A discloses a motor valve having a screw feeding mechanism for converting the rotational motion of a rotor into a linear motion.

### Citation List

### Patent Literature

Patent Literature 1: JP 2011-208716 A

### Summary of Invention

### Technical Problem

Herein, in the conventional motor-driven valve as described above, the stopper (the fixation member), whose disc-like member is adapted to abut the upper faces of the rotor and the valve shaft holder and whose cylindrical member is securely welded to the upper end of the valve shaft, and the valve-closing spring sandwich the rotor and the valve shaft holder so as to limit their vertical relative movement.

The fixation between the cylindrical member of the stopper and the valve shaft is typically performed such that a contact portion between the cylindrical member and the valve shaft, that is, an inner peripheral portion on the upper end face of the cylindrical member and an outer peripheral portion on the upper end face of the valve shaft, which are aligned with each other in advance, are welded from above using laser welding or the like.

However, in the conventional motor-driven valve as described above, there has been a concern that due to variations in the dimensions of the components or the like, the relative position (in the vertical direction) between the inner peripheral portion on the upper end face of the cylindrical member and the outer peripheral portion on the upper end face of the valve shaft, which are to be welded, is likely to be misaligned, causing heat input into the members to vary to thereby increase variations in the welding strength.

The present disclosure has been made in view of the foregoing, and provides a motor-driven valve capable of securing a stable welding strength between the fixation member and the valve shaft, even when, for example, a misalignment between the fixation member and the valve shaft occurs.

### Solution to Problem

To solve the foregoing, a motor-driven valve according to the present disclosure is characterized by the features of claim 1. This motor-driven valve basically includes a valve shaft provided with a valve element, a guide bush into which the valve shaft is inserted in such a manner as being relatively movable in an axis direction and relatively rotatable about an axis, a valve body that has a valve orifice with a valve seat and to which the guide bush is securely attached, a valve shaft holder externally disposed around the valve shaft, an urging member interposed between the valve shaft and the valve shaft holder and adapted to urge the valve element in a direction in which a valve is closed, a fixation member fixed to the valve shaft and brought into contact with the valve shaft holder with an urging force applied by the urging member so as to couple the valve shaft holder to the valve shaft, a motor having a rotor disposed on an outer periphery of the valve shaft holder and a stator adapted to rotary drive the rotor so as to rotate the valve shaft holder with respect to the guide bush, and a thread feeding mechanism provided between the guide bush and the valve shaft holder and adapted to lift and lower the valve element with respect to the valve seat in accordance with rotary drive of the rotor, in which the fixation member is externally fitted and securely attached from a side with respect to the axis direction, to the valve shaft.

According to the invention, the fixation member has a cylindrical fixed portion that is externally fitted and securely attached to the valve shaft, and a flange extending outward from the fixed portion and brought into contact with the valve shaft holder.

According to the invention, the fixed portion has a stepped cylindrical shape with a small-diameter upper portion that is disposed in contact with the valve shaft and a large-diameter lower portion disposed apart from the valve shaft, the large-diameter lower portion being provided with the flange, the small-diameter upper portion being securely attached to the valve shaft from the side with respect to the axis direction.

In a further aspect, the small-diameter upper portion may be shorter than the large-diameter lower portion in the axis direction.

According to the present invention, the fixed portion is securely attached to the valve shaft at a plurality of portions in the circumferential direction.

In yet a further aspect, the fixed portion and the flange may be integrally formed.

In another aspect, the fixation member may be made from a plate member with a uniform plate thickness.

According to the present invention, the fixation member is securely attached to the valve shaft through welding.

In still yet another aspect, the thickness of a securely attached portion of the fixation member may be in the range of 0.1 to 0.35 mm.

In yet a further aspect, the fixation member may be securely attached to the valve shaft at a position where it protrudes from the rotor as seen from the side.

### Advantageous Effects of Invention

According to the present invention the fixation member is externally fitted and securely attached from the side with respect to the axis direction, to the valve shaft, and is thus less likely to be affected by a misalignment (in the vertical direction) between the fixation member and the valve shaft, even if such a misalignment occurs, so that a stable welding strength between the fixation member and the valve shaft can be secured, as compared to conventional ones, in which, for example, the fixation member and the valve shaft are securely welded together from above (from the upper side in the axis direction).

### Brief Description of Drawings

Fig. 1 is a longitudinal cross-sectional view illustrating an embodiment of a motor-driven valve in a fully-closed state according to the present disclosure;
Fig. 2 is a longitudinal cross-sectional view illustrating the embodiment of the motor-driven valve in a state in which a valve shaft holder and a fixation member are brought into contact with each other according to the present disclosure;
Fig. 3A is a perspective view of the valve shaft holder illustrated in Fig. 1;
Fig. 3B is a top view of the valve shaft holder illustrated in Fig. 1; and
Fig. 4 illustrates enlarged longitudinal cross-sectional views of a main part, each view showing the relation between a portion where a valve shaft and the fixation member of Fig. 1 are securely attached together and a misalignment between the valve shaft and the fixation member.

### Description of Embodiments

An embodiment of the present disclosure will be described below with reference to the drawings.

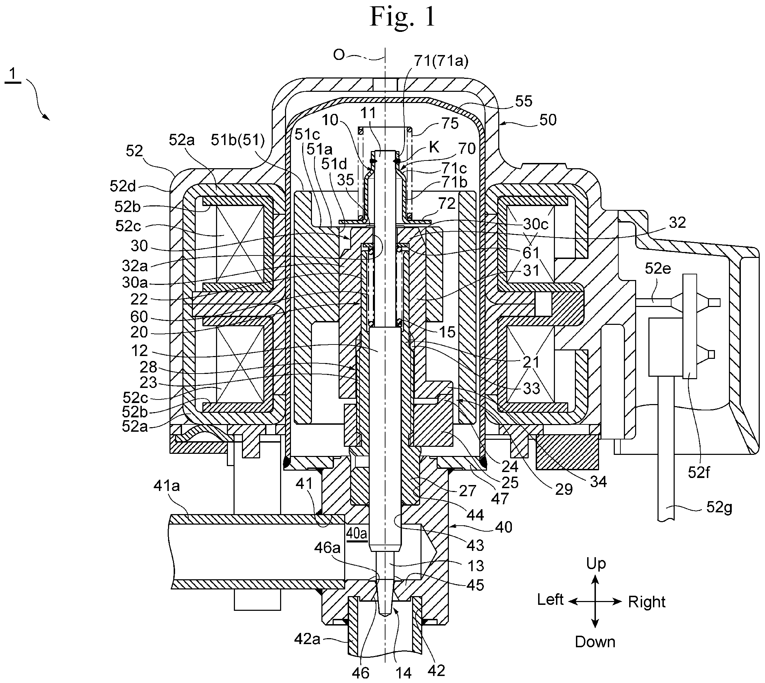

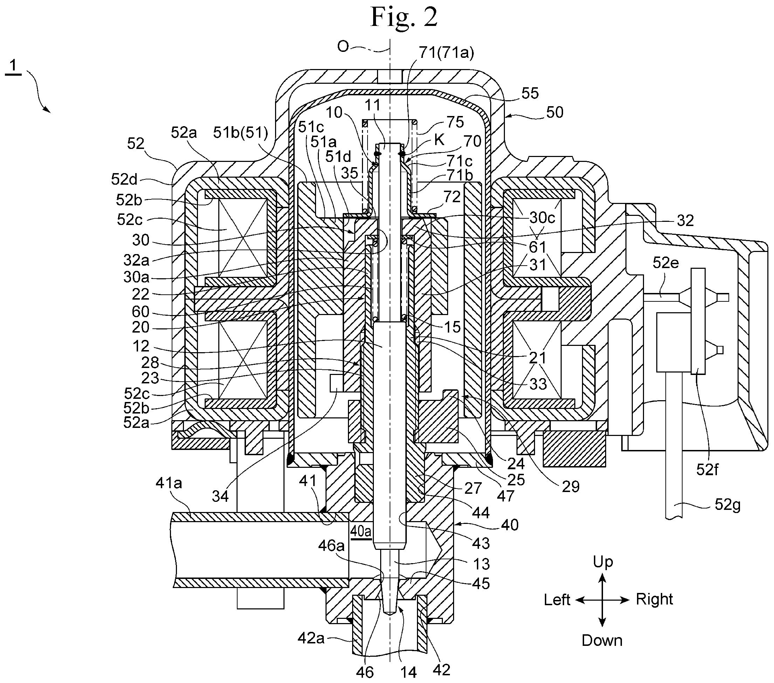

It should be noted that some of the gaps formed between the members, spacing between the members, and the like illustrated in the drawings may be exaggerated for easier understanding of the disclosure and for convenience in the preparation of drawings. Further, descriptions indicating positions and directions such as up, down, left, and right in the present specification are based on the directions pointed by the arrows in Fig. 1 and Fig. 2, and do not indicate the positions and directions in actual use.

Fig. 1 and Fig. 2 are longitudinal cross-sectional views illustrating an embodiment of a motor-driven valve according to the present disclosure: Fig. 1 illustrates a fully-closed state (a state in which a rotor and a valve shaft holder are at the lowest positions); and Fig. 2 illustrates a state in which the valve shaft holder and a fixation member are brought into contact with each other.

A motor-driven valve 1 of an embodiment illustrated in the drawings is used as a flow control valve or the like incorporated into refrigeration cycles of air conditioners, refrigerators, or the like, and mainly includes a valve shaft 10 provided with a valve element 14, a guide bush 20, a valve shaft holder 30, a valve body 40, a can 55, a stepping motor 50 having a rotor 51 and a stator 52, a compression coil spring (an urging member) 60, a fixation member 70 as a stopper, a thread feeding mechanism 28, and a lower stopper mechanism 29.

The valve shaft 10 is made of metal, such as brass and SUS, and includes, from the top, an upper small-diameter portion 11, an intermediate large-diameter portion 12, and a lower small-diameter portion 13, the lower small-diameter portion 13 having the valve element 14 in a stepped inverted conical shape integrally formed at its lower end, the valve element 14 being adapted to control the flow rate of a liquid (a refrigerant) flowing through a valve orifice 46.

The guide bush 20 includes a cylindrical portion 21 into which the valve shaft 10 (the intermediate large-diameter portion 12 thereof) is inserted in such a manner as being relatively movable (slidable) in the axis O direction and relatively rotatable about the axis O, and an extending portion 22 into which the upper end side of the intermediate large-diameter portion 12 and the lower end side of the upper small-diameter portion 11 of the valve shaft 10 are inserted, the extending portion 22 extending upward from the upper end of the cylindrical portion 21 and having an inner diameter larger than that of the cylindrical portion 21. The cylindrical portion 21 of the guide bush 20 has formed on its outer periphery a fixed thread portion (an external thread portion) 23 that forms one part of the thread feeding mechanism 28 that is adapted to lift and lower the valve element 14 of the valve shaft 10 with respect to a valve seat 46a of the valve body 40 in accordance with the rotary drive of the rotor 51. Further, a lower portion with a large diameter (a portion lower than the fixed thread portion 23) of the cylindrical portion 21 forms a fitting portion 27 to be fitted into a fitting hole 44 of the valve body 40. The fixed thread portion 23 (a portion thereof lower than the valve shaft holder 30) has a lower stopper 25 securely threaded thereto, the lower stopper 25 having a protruding fixed stopper 24 integrally formed on its outer periphery, the fixed stopper 24 forming one part of the lower stopper mechanism 29 that is adapted to limit the rotational downward movement of the valve shaft holder 30.

The valve shaft holder 30 is made of, for example, resin (may be made of resin reinforced with SUS, carbon fiber, or the like, which has a high abrasion resistance, considering the contact with the fixation member 70), and has a cylindrical portion 31 into which the guide bush 20 is inserted, and a ceiling portion 32 provided with an insertion hole 32a penetrating therethrough, through the insertion hole 32a, the upper end of the valve shaft 10 (the upper small-diameter portion 11 thereof) being inserted (in such a manner as being relatively movable in the axis O direction and relatively rotatable about the axis O). The cylindrical portion 31 of the valve shaft holder 30 has formed on its inner peripheral lower portion a movable thread portion (an internal thread portion) 33 that threadably engages with the fixed thread portion 23 of the guide bush 20 to form the thread feeding mechanism 28, and the inner peripheral upper portion of the cylindrical portion 31 is brought into contact with (slidingly contacts) the outer periphery of the cylindrical extending portion 22 of the guide bush 20. Further, the cylindrical portion 31 has a protruding movable stopper 34 integrally formed on its outer peripheral lower end, the movable stopper 34 forming the other part of the lower stopper mechanism 29.

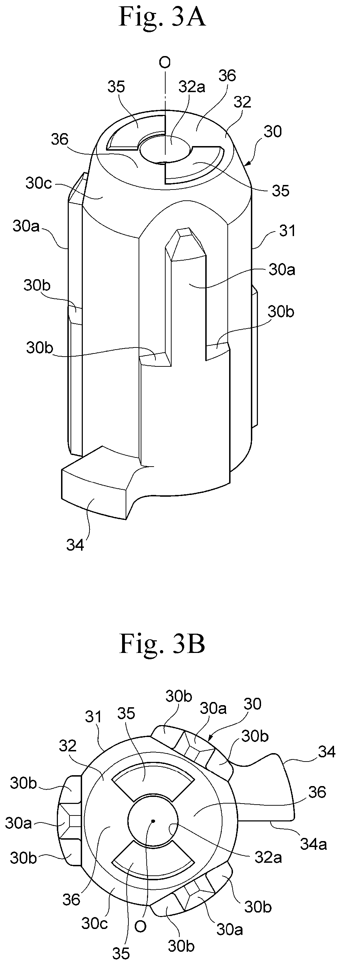

Furthermore, the upper face of the ceiling portion 32 (a face thereof facing a flange 72 of the fixation member 70 that will be described later) of the valve shaft holder 30 has integrally formed thereon two projections 35, each having a substantially fan shape (herein, a fan shape with a central angle of approximately 90 degrees) as seen in plan view (as seen in the axis O direction), as can be well understood with reference to Figs. 3A and 3B as well as Fig. 1 and Fig. 2. Specifically, the two projections 35 project upward on the opposite sides of the axis O (in other words, the two projections 35 are positioned symmetrically about the rotational axis O of the valve shaft holder 30) around the insertion hole 32a (in other words, around the rotational axis O of the valve shaft holder 30) on the upper face of the ceiling portion 32, and a portion between the two projections 35 (in the present embodiment, a portion above an end face 34a in the circumferential direction of the movable stopper 34, that is, a portion seen as overlapping the position of the end face 34a in the circumferential direction of the movable stopper 34 when viewed in the axis O direction) is cut out (a cutout 36 in a substantially fan shape (herein, a fun shape with a central angle of approximately 90 degrees) as seen in plan view).

With the projections 35, the area of the valve shaft holder 30 that contacts the fixation member 70 is reduced, and therefore, for example, the contact resistance (the rotational sliding resistance) when the valve shaft holder 30 is brought into contact with the fixation member 70 is reduced, so that the slidability between the valve shaft holder 30 and the fixation member 70 in opening the valve is improved, thereby reducing the axis deviation of the valve shaft 10 as well as operational defects, such as sudden deceleration and stop, and reverse rotation of the rotor 51.

Further, when the valve shaft holder 30 is formed by molding resin or the like, the positions of weld lines and parting lines formed in the molding are aligned with the position of the cutout 36, that is, with the cutout 36 provided in the positions where weld lines and parting lines are formed in the molding, the contact resistance (the rotational sliding resistance) can be further reduced, and the flatness of the sliding surface of the valve shaft holder 30 is also improved, thereby further reducing the axis deviation of the valve shaft 10.

For example, when a gate for injecting resin for molding is provided on the side opposite to the movable stopper 34 of the valve shaft holder 30, with the cutout 36 provided above the movable stopper 34 (more specifically, in a portion above the end face 34a in the circumferential direction of the movable stopper 34) as described above, the projections 35 of the valve shaft holder 30 are free of weld lines and parting lines formed in the molding, so that the contact resistance (the rotational sliding resistance) can be further reduced, and the flatness of the sliding surface of the valve shaft holder 30 is also improved, thereby further reducing the axis deviation of the valve shaft 10.

Furthermore, with the projections 35 disposed symmetrically about the rotational axis O of the valve shaft holder 30 on the upper face of the ceiling portion 32 of the valve shaft holder 30, the axis deviation of the valve shaft 10 can be more effectively reduced, and with the projections 35 disposed separately in a plurality of portions around the rotational axis O of the valve shaft holder 30, the area of the valve shaft holder 30 (the projections 35 thereof) that contacts the fixation member 70 can be further reduced.

It should be noted that it is needless to mention that the shape, the number, the positions, and the like of the projections 35 provided on the upper face of the ceiling portion 32 of the valve shaft holder 30 are not limited to those in the example illustrated in the drawings, and the projections 35 may be omitted.

In addition, a cylindrical compression coil spring (an urging member) 60 is disposed in a contracted manner between a terrace face (a stepped portion) 15, which is formed between the upper small-diameter portion 11 and the intermediate large-diameter portion 12 of the valve shaft 10, and the underside of the ceiling portion 32 of the valve shaft holder 30, with a disc-like presser plate (washer) 61 sandwiched therebetween, the presser plate 61 being disposed on the underside of the ceiling portion 32 of the valve shaft holder 30, such that the cylindrical compression coil spring 60 is externally disposed around the upper small-diameter portion 11 of the valve shaft 10, the cylindrical compression coil spring 60 being adapted to apply an urging force in a direction in which the valve shaft 10 and the valve shaft holder 30 move away from each other in their lifting and lowering direction (in the axis O direction), that is, to constantly urge the valve shaft 10 (the valve element 14) downward (in the direction in which the valve is closed).

The valve body 40 includes a cylindrical body made of metal, such as brass and SUS. This valve body 40 has a valve chamber 40a, into and out of which a liquid is delivered. The valve chamber 40a has, on its side, a lateral first opening 41 to which a first conduit 41a is securely coupled through brazing or the like, and in its ceiling portion, an insertion hole 43 and a fitting hole 44, through the insertion hole 43, the valve shaft 10 (the intermediate large-diameter portion 12 thereof) being inserted in such a manner as being relatively movable (slidable) in the axis O direction and relatively rotatable about the axis O, and into the fitting hole 44, a lower portion (the fitting portion 27) of the guide bush 20 being fitted so as to be securely attached thereto. The valve chamber 40a has, on its lower portion, a longitudinal second opening 42 to which a second conduit 42a is securely coupled through brazing or the like. Further, a bottom wall 45 between the valve chamber 40a and the second opening 42 has formed thereon the stepped valve orifice 46 with the valve seat 46a that the valve element 14 contacts and leaves.

The valve body 40 has an annular flanged plate 47 securely attached to its upper end through swaging, brazing, or the like, and a stepped portion provided on the outer periphery of the flanged plate 47 is hermetically joined to a lower end of the cylindrical can 55 with a ceiling, through butt welding or the like.

The rotor 51 is rotatably disposed on the inner side of the can 55 and the outer side of the guide bush 20 and the valve shaft holder 30, and the stator 52 including a yoke 52a, bobbin 52b, stator coil 52c, resin mold cover 52d, and the like is disposed on the outer side of the can 55 so as to rotary drive the rotor 51. A plurality of lead terminals 52e is coupled to the stator coil 52c, and a plurality of lead wires 52g is coupled to the lead terminals 52e via a substrate 52f, so that the stator coil 52c is energized to rotate, about the axis O, the rotor 51 disposed inside the can 55.

The rotor 51 disposed inside the can 55 engages with and is supported by the valve shaft holder 30, so that the valve shaft holder 30 is rotated together with (integrally with) the rotor 51.

Specifically, the rotor 51 is in a double-pipe structure including an inner cylinder 51a that is relatively short in the vertical direction (in the axis O direction), an outer cylinder 51b that is relatively long in the vertical direction (in the axis O direction), and a coupling portion 51c for coupling the inner cylinder 51a and the outer cylinder 51b at a predetermined angle position around the axis O. The inner cylinder 51a has formed on its inner periphery (for example, with an angular interval of 120 degrees around the axis O) a longitudinal groove 51d extending along the axis O direction (the vertical direction).

Meanwhile, as can be well understood with reference to Figs. 3A and 3B, the outer periphery (an upper half portion thereof) of the valve shaft holder 30 has, at its upper end, a tapered surface portion 30c having a truncated cone-shaped surface, a protrusion 30a protruding so as to extend in the vertical direction (for example, with an angular interval of 120 degrees around the axis O) on a side below the tapered surface portion 30c, and locking faces 30b for supporting the rotor 51, which are facing upward on the opposite sides in the lower portion of the protrusion 30a.

With such a configuration, the longitudinal groove 51d of the inner cylinder 51a of the rotor 51 engages with the protrusion 30a of the valve shaft holder 30, with the underside of the inner cylinder 51a of the rotor 51 and the locking faces 30b of the valve shaft holder 30 abutting each other, so that the rotor 51 is securely supported on the outer periphery of the valve shaft holder 30, while being aligned with the valve shaft holder 30, and the valve shaft holder 30 is rotated together with the rotor 51 while supporting the rotor 51 within the can 55.

It should be noted that in the present embodiment, the rotor 51 engages with and is supported by the valve shaft holder 30, such that the upper face of the valve shaft holder 30 is flush with or positioned slightly above the upper face of the inner cylinder 51a of the rotor 51.

On the upper side of the rotor 51 and the valve shaft holder 30, the fixation member 70 is disposed such that it is externally securely fitted to the upper end of the valve shaft 10 (the upper small-diameter portion 11 thereof), the fixation member 70 being adapted to couple the valve shaft 10 and the valve shaft holder 30 together as well as to prevent the relative movement between the valve shaft holder 30 and the rotor 51 in their lifting and lowering direction (in other words, to press the rotor 51 downward against the valve shaft holder 30 for latching it to prevent from slipping out).

The fixation member 70 includes a (single) plate member having a constant plate thickness that is made through machining such as pressing and cutting of a member made of metal, such as brass and SUS. In the present embodiment, this fixation member 70 is disposed such that it is externally fitted to and securely attached to the upper end of the valve shaft 10 (the upper small-diameter portion 11 thereof) by being welded, swaged, bonded, or the like from the side with respect to the axis O direction (that is, from the outer periphery side of the fixation member 70).

Specifically, the fixation member 70 includes a stepped cylindrical fixed portion 71 and a disc-like flange 72 that are integrally formed, the stepped cylindrical fixed portion 71 being externally fitted to the upper end of the valve shaft 10 (the upper small-diameter portion 11 thereof), the disc-like flange 72 extending outward (in a direction substantially perpendicular to the axis O) from the lower end of the fixed portion 71 (the large-diameter lower portion 71b thereof) to the vicinity of the inner cylinder 51a of the rotor 51.

The fixed portion 71 includes, from the top, a small-diameter upper portion 71a, a truncated cone-shaped surface portion 71c, and a large-diameter lower portion 71b, the small-diameter upper portion 71a having a diameter that is substantially the same as the outer diameter of the upper small-diameter portion 11 of the valve shaft 10 and a relatively short length in the vertical direction (in the axis O direction), and being disposed in contact with the upper small-diameter portion 11 (the outer periphery surface thereof) of the valve shaft 10, the large-diameter lower portion 71b having a diameter larger than the outer diameter of the upper small-diameter portion 11 of the valve shaft 10 and a relatively long length in the vertical direction (in the axis O direction), and being disposed apart from (externally disposed with a gap around) the upper small-diameter portion 11 (the outer periphery surface thereof) of the valve shaft 10. The flange 72 is continuously provided to the lower end of the large-diameter lower portion 71b.

In the present embodiment, the upper end of the valve shaft 10 (the upper small-diameter portion 11 thereof) protrudes (upward) from the upper end of the rotor 51 disposed on the outer side of the valve shaft 10 as seen from the side (in a direction substantially perpendicular to the axis O). The small-diameter upper portion 71a of the fixed portion 71 is externally fitted to the upper end (the portion protruding from the upper end of the rotor 51) of this valve shaft 10 (the upper small-diameter portion 11 thereof), and a center portion (in the vertical direction) of the small-diameter upper portion 71a is welded, swaged, bonded, or the like to the valve shaft 10 from the side with respect to the axis O direction (that is, from the outer periphery side of the small-diameter upper portion 71a), so that the fixation member 70 is securely attached to the upper end of the valve shaft 10 (the upper small-diameter portion 11 thereof) (a securely attached portion K). Specifically, in the present embodiment, the small-diameter upper portion 71a of the fixed portion 71 of the fixation member 70 is securely attached to the upper end of the valve shaft 10 (the upper small-diameter portion 11 thereof) at a position where it protrudes (upward) from the upper end of the rotor 51 as seen from the side.

It should be noted that fixation of the small-diameter upper portion 71a to the valve shaft 10 (the upper small-diameter portion 11 thereof) through welding, swaging, bonding, or the like may be made at a plurality of portions in the circumferential direction (around the axis O) (for example, at three portions equidistantly (with equiangular spacing) in the circumferential direction) (for example, simultaneously) or in the entire circumferential direction. When the fixation is made at a plurality of portions, simultaneous fixation enables the welding between the fixed portion 71 of the fixation member 70 and the valve shaft 10 with a higher accuracy in the inclination and coaxiality.

Further, when the fixation member 70 is securely welded to the valve shaft 10 through laser welding, TIG welding, or the like, the thickness (the plate thickness) (specifically, the thickness of the securely attached (welded) portion K) of the fixation member 70 may be in the range of 0.1 to 0.35 mm in relation to the welding strength or the like. When the fixation is made through welding, the fixation member 70 and the valve shaft 10 may be made of the same material or materials having equivalent melting points.

Meanwhile, the underside of the flange 72 continuously provided to the lower end of the fixed portion 71 (the large-diameter lower portion 71b thereof) faces the upper face of the valve shaft holder 30 and the upper face of the rotor 51 (the inner cylinder 51a thereof), and is brought into contact with the projections 35 (the upper faces thereof) provided on the upper face of the valve shaft holder 30, and the rotor 51 (the upper face of the inner cylinder 51a thereof).

As described above, the rotor 51 is sandwiched between the valve shaft holder 30 to be urged upward with an urging force of the compression coil spring 60 and the fixation member 70 (the outer peripheral portion of the flange 72 thereof), so as to be latched to be prevented from slipping out.

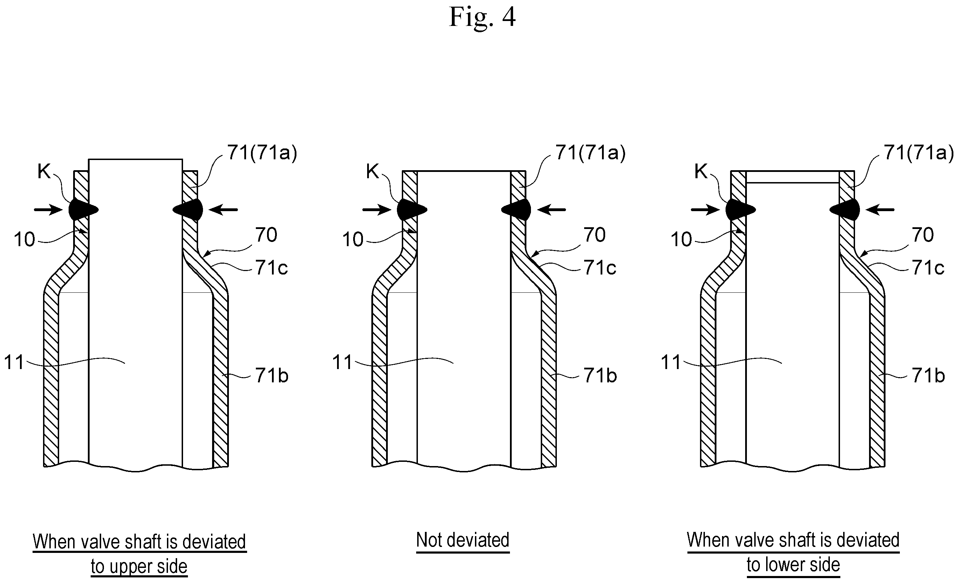

It should be noted that the fixation member 70 is securely attached to the valve shaft 10 (the upper small-diameter portion 11 thereof) from the side (from the lateral direction) (at a position above the upper end of the rotor 51), after the guide bush 20, lower stopper 25, valve shaft holder 30, rotor 51, valve body 40, and the like are externally disposed around the valve shaft 10 and before the can 55 is disposed on the valve body 40. In this case, variations in dimensions of components or the like may cause a misalignment between the fixation member 70 and the valve shaft 10, but securely fixing of the fixation member 70 to the valve shaft 10 (the upper small-diameter portion 11 thereof) from the side, as described above, can avoid the effect of such a misalignment, so that the welding strength between the fixation member 70 and the valve shaft 10 can be secured (see Fig. 4).

Further, the fixation member 70 (the large-diameter lower portion 71b of the fixed portion 71 thereof) fixed to the upper end of the valve shaft 10 has a return spring 75 externally disposed thereon, the return spring 75 including a coil spring adapted to urge the valve shaft holder 30 against the guide bush 20 to prevent disengagement of the fixed thread portion 23 of the guide bush 20 and the movable thread portion 33 of the valve shaft holder 30 that are threadably engaged, the disengagement being caused by an excessive upward movement of the valve shaft holder 30 with respect to the guide bush 20 while operation is performed.

In the motor-driven valve 1 with the aforementioned configuration, similarly to the conventional motor-driven valves, when the stator 52 (the stator coil 52c thereof) is energized to rotate the rotor 51, the valve shaft holder 30 and the valve shaft 10 are rotated integrally with the rotor 51. At this time, the thread feeding mechanism 28 including the fixed thread portion 23 of the guide bush 20 and the movable thread portion 33 of the valve shaft holder 30 lifts or lowers the valve shaft 10 together with the valve element 14, to thereby increase or decrease the gap (the lift amount, valve opening) between the valve element 14 and the valve seat 46a, so that the flow rate of a liquid such as a refrigerant is adjusted.

Further, in the motor-driven valve 1 of the present embodiment, similarly to the conventional motor-driven valves, when the valve shaft 10 is lowered to have the valve element 14 be seated in the valve seat 46a, the movable stopper 34 of the valve shaft holder 30 and the fixed stopper 24 fixed to the guide bush 20 are positioned apart from each other (see Fig. 2), and then, when the stator 52 (the stator coil 52c thereof) is further energized to further rotate the rotor 51 so that the valve shaft holder 30 is lowered while being rotated integrally with the rotor 51, the movable stopper 34 of the valve shaft holder 30 and the fixed stopper 24 fixed to the guide bush 20 abut each other, that is, the rotation and lowering of the valve shaft holder 30 is halted by the lower stopper mechanism 29, thereby compressing the compression coil spring 60 interposed between the valve shaft holder 30 and the valve shaft 10 to firmly press the valve element 14 against the valve seat 46a (see Fig. 1).

As described above, in the motor-driven valve 1 of the present embodiment, since the fixation member 70 is externally fitted to the valve shaft 10 (the upper small-diameter portion 11 thereof) and securely attached to the valve shaft 10 (the upper small-diameter portion 11 thereof) from the side with respect to the axis O direction, even when a misalignment (in the vertical direction) between the fixation member 70 and the valve shaft 10 occurs, the stable welding strength between the fixation member 70 and the valve shaft 10 can be secured without being affected by the misalignment, as compared to conventional ones, in which, for example, the fixation member and the valve shaft are securely welded from above (from the upper side in the axis direction).

It should be noted that in the aforementioned embodiment, the motor-driven valve with the valve element 14 to be seated in the valve seat 46a has been described, but it is needless to mention, without need to provide details, that the same functions and effects can also be obtained in motor-driven valves without the valve closure function, in which a gap with a predetermined size is formed between the valve element and the valve seat (that is, the valve element is not seated in the valve seat) when the valve element is at the lowest position (normally, in a fully-closed state).

### Reference Signs List

- 1: Motor-driven valve
- 10: Valve shaft
- 11: Upper small-diameter portion
- 12: Intermediate large-diameter portion
- 13: Lower small-diameter portion
- 14: Valve element
- 15: Terrace face
- 20: Guide bush
- 21: Cylindrical portion
- 23: Fixed thread portion (external thread portion)
- 24: Fixed stopper
- 28: Thread feeding mechanism
- 29: Lower stopper mechanism
- 30: Valve shaft holder
- 30a: Protrusion
- 30b: Locking face
- 30c: Tapered surface portion
- 31: Cylindrical portion
- 32: Ceiling portion
- 33: Movable thread portion (internal thread portion)
- 34: Movable stopper
- 35: Projection
- 36: Cutout
- 40: Valve body
- 40a: Valve chamber
- 41: First opening
- 41a: First conduit
- 42: Second opening
- 42a: Second conduit
- 43: Insertion hole
- 44: Fitting hole
- 45: Bottom wall
- 46: Valve orifice
- 46a: Valve seat
- 50: Stepping motor
- 51: Rotor
- 52: Stator
- 55: Can
- 60: Compression coil spring (urging member)
- 70: Fixation member
- 71: Fixed portion
- 71a: Small-diameter upper portion
- 71b: Large-diameter lower portion
- 71c: Truncated cone-shaped surface portion
- 72: Flange
- K: Securely attached portion
- O: Axis

## Claims

1. A motor-driven valve (1) comprising:
a valve shaft (10) provided with a valve element (14);
a guide bush (20) into which the valve shaft (10) is inserted in such a manner as being relatively movable in an axis direction and relatively rotatable about an axis;
a valve body (40) that has a valve orifice (46) with a valve seat (46a) and to which the guide bush (20) is securely attached;
a valve shaft holder (30) externally disposed around the valve shaft (10);
an urging member (60)
interposed between the valve shaft (10) and the valve shaft holder (30) and adapted to urge the valve element (14) in a direction in which a valve is closed;
a fixation member (70) fixed to the valve shaft (10) and brought into contact with the valve shaft holder (30) with an urging force applied by the urging member (60) so as to couple the valve shaft holder (30) to the valve shaft (10);
a motor (50) having a rotor (51) disposed on an outer periphery of the valve shaft holder (30) and a stator (52) adapted to rotary drive the rotor (51) so as to rotate the valve shaft holder (30) with respect to the guide bush (20); and
a thread feeding mechanism (28) provided between the guide bush (20) and the valve shaft holder (30) and adapted to lift and lower the valve element (14) with respect to the valve seat (46a) in accordance with rotary drive of the rotor (51),
wherein the fixation member (70) has a cylindrical fixed portion (71) that is externally fitted and securely attached from a side with respect to the axis direction, to the valve shaft (10), and a flange (72) extending outward from the fixed portion (71) and brought into contact with the valve shaft holder (30), and
**characterized in that** the fixed portion (71) has a stepped cylindrical shape with a small-diameter upper portion (71a) that is disposed in contact with the valve shaft (10) and a large-diameter lower portion (71b) disposed apart from the valve shaft (10), the large-diameter lower portion (71b) being provided with the flange (72), the small-diameter upper portion (71a) being securely attached to the valve shaft (10) from the side with respect to the axis direction,
wherein the fixed portion (71) is securely attached to the valve shaft (10) at a plurality of portions in a circumferential direction through welding.

2. The motor-driven valve according to claim 1, wherein the small-diameter upper portion (71a) is shorter than the large-diameter lower portion (71b) in the axis direction.

3. The motor-driven valve according to any one of claims 1 or 2, wherein the fixed portion (71) and the flange (72) are integrally formed.

4. The motor-driven valve according to any one of claims 1 to 3, wherein the fixation member (70) is made from a plate member with a uniform plate thickness.

5. The motor-driven valve according to any one of claims 1 to 4, wherein a thickness of a securely attached portion of the fixation member (70) is in a range of 0.1 to 0.35 mm.

6. The motor-driven valve according to any one of claims 1 to 5, wherein the fixation member (70) is securely attached to the valve shaft (10) at a position where the fixation member (70) protrudes from the rotor (51) as seen from the side.

## Patentansprüche

1. Ein motorgetriebenes Ventil (1) umfassend:
einen Ventilschaft (10), versehen mit einem Ventilelement (14);
eine Führungsbuchse (20), in die der Ventilschaft (10) derart eingesetzt ist, dass er relativ in einer Achsrichtung beweglich und relativ um eine Achse drehbar ist;
einen Ventilkörper (40), der eine Ventilöffnung (46) mit einem Ventilsitz (46a) umfasst und an dem die Führungsbuchse fest angebracht ist;
einen Ventilschafthalter (30), der außen um den Ventilschaft (10) herum angeordnet ist;
ein Druckelement (60), dass zwischen dem Ventilschaft (10) und dem Ventilschafthalter (30) angeordnet ist, und dazu eingerichtet ist, das Ventilelement (14) in eine Richtung zu drängen, in der ein Ventil geschlossen ist;
ein Befestigungselement (70), dass an dem Ventilschaft (10) befestigt ist und durch eine von dem Druckelement (60) aufgebrachte Druckkraft mit dem Ventilschafthalter (30) in Berührung gebracht wird, um den Ventilschafthalter (30) mit dem Ventilschaft (10) zu koppeln;
einen Motor (50) mit einem Rotor (51), der an einem äußeren Umfang des Ventilschafthalters (30) angeordnet ist, und einem Stator (52), der dazu eingerichtet ist, den Rotor (51) drehend anzutreiben, um den Ventilschafthalter (30) in Bezug auf die Führungsbuchse (20) zu drehen; und
einen Gewindeführungsmechanismus (28), der zwischen der Führungsbuchse (20) und dem Ventilschafthalter (30) angeordnet ist, und dazu eingerichtet ist, das Ventilelement (14) in Bezug auf den Ventilsitz (46a) gemäß dem Drehantrieb des Rotors (51) anzuheben und abzusenken,
wobei das Befestigungselement (70) einen zylindrischen, feststehenden Abschnitt (71), der außen angeordnet und in Bezug auf die Achsrichtung seitlich fest mit dem Ventilschaft (10) verbunden ist, und einen Flansch (72), der sich von dem feststehenden Abschnitt (71) nach außen hin erstreckt und mit dem Ventilschafthalter (30) in Berührung gebracht wird, umfasst, und
**dadurch gekennzeichnet, dass** der feststehende Abschnitt (71) eine abgestufte zylindrische Form mit einem mit dem Ventilschaft (10) in Berührung stehenden oberen Abschnitt mit kleinen Durchmesser (71a), und einen von dem Ventilschaft (10) getrennt angeordneten unteren Abschnitt mit großem Durchmesser (71b) umfasst, wobei der untere Abschnitt mit großem Durchmesser (71b) den Flansch (72) umfasst, und wobei der obere Abschnitt mit kleinen Durchmesser (71a) in Bezug auf die Achsrichtung seitlich fest mit dem Ventilschaft (10) verbunden ist,
wobei der feststehende Abschnitt (71) mit dem Ventilschaft (10) an einer Vielzahl von Abschnitten in Umfangsrichtung durch Schweißen fest verbunden ist.

2. Das motorgetriebene Ventil (1) nach Anspruch 1, wobei der obere Abschnitt mit kleinen Durchmesser (71a) in der Achsrichtung kürzer ist als der untere Abschnitt mit großem Durchmesser (71b).

3. Das motorgetriebene Ventil (1) nach einem der Ansprüche 1 bis 2, wobei der feststehende Abschnitt (71) und der Flansch (72) einstückig ausgebildet sind.

4. Das motorgetriebene Ventil (1) nach einem der Ansprüche 1 bis 3, wobei das Befestigungselement (70) aus einem Plattenelement mit einheitlicher Dicke besteht.

5. Das motorgetriebene Ventil (1) nach einem der Ansprüche 1 bis 4, wobei eine Dicke eines fest angebrachten Abschnitts des Befestigungselement (70) in einem Bereich von 0,1 bis 0,35 mm liegt.

6. Das motorgetriebene Ventil (1) nach einem der Ansprüche 1 bis 5, wobei das Befestigungselement (70) mit dem Ventilschaft (10) an einer Position, an der das Befestigungselement (70) seitlich gesehen vom Rotor (51) hervorsteht, fest verbunden ist.

## Revendications

1. Soupape motorisée (1) comprenant :
une tige de soupape (10) prévue avec un élément de soupape (14) ;
une douille de guidage (20) dans laquelle la tige de soupape (10) est insérée afin d'être relativement mobile dans une direction axiale et afin de pouvoir tourner relativement autour d'un axe ;
un corps de soupape (40) qui a un orifice de soupape (46) avec un siège de soupape (46a) et auquel la douille de guidage (20) est solidement fixée;
un support de tige de soupape (30) extérieurement disposé autour de la tige de soupape (10) ;
un élément de poussée (60) intercalé entre la tige de soupape (10) et le support de tige de soupape (30) et adapté pour pousser l'élément de soupape (14) dans une direction dans laquelle une soupape est fermée ;
un élément de fixation (70) fixé à la tige de soupape (10) et amené en contact avec le support de tige de soupape (30) avec une force de poussée appliquée par l'élément de poussée (60) afin de coupler le support de tige de soupape (30) à la tige de soupape (10) ;
un moteur (50) ayant un rotor (51) disposé sur une périphérie externe du support de tige de soupape (30) et un stator (52) adapté pour entraîner en rotation le rotor (51) afin de faire tourner le support de tige de soupape (30) par rapport à la douille de guidage (20) ; et
un mécanisme d'alimentation de filetage (28) prévu entre la douille de guidage (20) et le support de tige de soupape (30) et adapté pour lever et abaisser l'élément de soupape (14) par rapport au siège de soupape (46a) selon l'entraînement rotatif du rotor (51),
dans laquelle l'élément de fixation (70) a une partie fixe cylindrique (71) qui est extérieurement montée et solidement fixée à partir d'un côté par rapport à la direction axiale, sur la tige de soupape (10), et une bride (72) s'étendant vers l'extérieur à partir de la partie fixe (71) et amenée en contact avec le support de tige de soupape (30), et
**caractérisée en ce que** la partie fixe (71) a une forme cylindrique étagée avec une partie supérieure de petit diamètre (71a) qui est disposée en contact avec la tige de soupape (10) et une partie inférieure de grand diamètre (71b) disposée à l'écart de la tige de soupape (10), la partie inférieure de grand diamètre (71b) étant prévue avec la bride (72), la partie supérieure de petit diamètre (71a) étant solidement fixée à la tige de soupape (10) à partir du côté par rapport à la direction axiale,
dans laquelle la partie fixe (71) est solidement fixée à la tige de soupape (10) au niveau d'une pluralité de parties dans une direction circonférentielle par soudage.

2. Soupape motorisée selon la revendication 1, dans laquelle la partie supérieure de petit diamètre (71a) est plus courte que la partie inférieure de grand diamètre (71b) dans la direction axiale.

3. Soupape motorisée selon l'une quelconque des revendications 1 ou 2, dans laquelle la partie fixe (71) et la bride (72) sont formées de manière solidaire.

4. Soupape motorisée selon l'une quelconque des revendications 1 à 3, dans laquelle l'élément de fixation (70) est réalisé à partir d'un élément de plaque avec une épaisseur de plaque uniforme.

5. Soupape motorisée selon l'une quelconque des revendications 1 à 4, dans laquelle une épaisseur d'une partie solidement fixée de l'élément de fixation (70) est dans une plage de 0,1 à 0,35 mm.

6. Soupape motorisée selon l'une quelconque des revendications 1 à 5, dans laquelle l'élément de fixation (70) est solidement fixé à la tige de soupape (10) dans une position dans laquelle l'élément de fixation (70) fait saillie du rotor (51), lorsqu'observé depuis le côté.
